# EUROPÄISCHE PATENTSCHRIFT

(11) **EP 1 592 583 B1**
(45) Veröffentlichungstag und Bekanntmachung des Hinweises auf die Patenterteilung: **24.01.2007**
(21) Anmeldenummer: 03797952.3
(22) Anmeldetag: 04.06.2003
(51) Int. Cl.: B60R 21/01

(54) **VORRICHTUNG ZUR DRAHTLOSEN ÜBERTRAGUNG EINES AUSLÖSESIGNALS**
DEVICE FOR THE WIRELESS TRANSMISSION OF A TRIGGER SIGNAL
DISPOSITIF DE TRANSMISSION SANS FIL D'UN SIGNAL DE DECLENCHEMENT

(30) Priorität: 19.12.2002 DE 10259546
(43) Veröffentlichungstag der Anmeldung: 09.11.2005
(73) Patentinhaber: ROBERT BOSCH GMBH, 70442 Stuttgart (DE)
(72) Erfinder: KAZMIERCZAK, Harald, 71717 Beilstein (DE); TSCHENTSCHER, Harald, 71723 Grossbottwar (DE); SCHUMACHER, Hartmut, 71691 Freiberg (DE); MATTES, Bernhard, 74343 Sachsenheim (DE)
(86) Internationale Anmeldenummer: PCT/DE2003/001849
(87) Internationale Veröffentlichungsnummer: WO 2004/056616

(56) Entgegenhaltungen:
- EP-A- 0 502 608
- DE-A- 10 046 695
- US-A- 5 810 606

## Beschreibung

### Stand der Technik

Die Erfindung geht aus von einer Vorrichtung zur drahtlosen Übertragung eines Auslösesignals nach der Gattung des unabhängigen Patentanspruchs.

Aus DE 100 46 695 A1 ist bereits eine Vorrichtung zur drahtlosen Übertragung eines Auslösesignals bekannt, die über einen ersten Pfad das Auslösesignal und über einen zweiten Pfad ein Redundanzsignal zum Auslösesignal überträgt. Die Auslösung erfolgt dann sekundärseitig nur, wenn sowohl das Auslösesignal, als auch das Redundanzsignal sekundärseitig erkannt werden.

### Vorteile der Erfindung

Die erfindungsgemäße Vorrichtung zur drahtlosen Übertragung eines Auslösesignals mit den Merkmalen des unabhängigen Patentanspruchs hat demgegenüber den Vorteil, dass nunmehr primär- und sekundärseitig jeweils zwei Prozessoren vorhanden sind, die derart konfiguriert sind, dass die Prozessoren Daten miteinander austauschen. Damit wird primär- und sekundärseitig ein hoher Grad einer Redundanz erreicht, der zu einer sichereren Auslösung des Rückhaltemittels wie einem Airbag oder einem Gurtstraffer führt. Dabei kann dann eine getrennte Auswertung des Redundanzsignals und des Auslösesignals erfolgen.

Durch die in den abhängigen Ansprüchen aufgeführten Maßnahmen und Weiterbildungen sind vorteilhafte Verbesserungen der im unabhängigen Patentanspruch angegebenen Vorrichtung zur drahtlosen Übertragung eines Auslösesignals möglich.

Besonders vorteilhaft ist, dass die Primärseite in einer Lenksäule und die Sekundärseite im Lenkrad angeordnet sind. Die erfindungsgemäße Vorrichtung ist dann zur drahtlosen Übertragung eines Auslösesignals für einen Airbag in einem Lenkrad geeignet.

Weiterhin ist es von Vorteil, dass die Primärseite im Fahrzeugchassis und die Sekundärseite in einem Fahrzeugsitz angeordnet sind. Dann ist die erfindungsgemäße Vorrichtung insbesondere für herausnehmbare Sitze geeignet, bei der eine drahtlose, insbesondere induktive Übertragung besonders geeignet ist.

Darüber hinaus ist es von Vorteil, dass primärseitig ein erster Transceiver zur drahtlosen Übertragung angeordnet ist, der mit den beiden primärseitig angeordneten Prozessoren verbunden ist und dass sekundärseitig ein erster Transceiverblock mit einem ersten Prozessor an einen ersten Anschluss eines Zündelements und ein zweiter Transceiverblock mit einem zweiten Prozessor an einen zweiten Anschluss des Zündelements angeschlossen sind. Der Transceiver sorgt für die Umsetzung der zu übertragenden Signale in Bezug auf Frequenz und Amplitude. Sekundärseitig sind jeweils die zwei Transceiverblöcke angeordnet, um sie an das Zündelement jeweils an die Highside und die Lowside einen Block anschließen zu können.

Weiterhin ist es von Vorteil, dass der erste Transceiverblock über eine erste Wicklung das Redundanzsignal, der zweite Transceiverblock über eine zweite Wicklung das Auslösesignal erhält. Dabei kann die erste Wicklung einem Leistungsübertrager und die zweite Wicklung einem Datenübertrager zugeordnet sein. Es ist möglich, alternativ einen einzigen Übertrager zu verwenden, der sekundärseitig zwei Wicklungen aufweist. Es könnte auch eine elektrische Filterung zur Trennung des Auslösesignals und des Enable-Signals vorgesehen sein.

Schließlich ist es auch von Vorteil, dass der erste Transceiverblock eine Versorgungsspannung erzeugt und bei Auslösung den Highsideschalter schließt, wobei der zweite Transceiver die Energiereserve erzeugt und überwacht, sowie bei Auslösung den Lowsideschalter schließt.

### Zeichnung

Ausführungsbeispiele der Erfindung sind in der Zeichnung dargestellt und werden in der nachfolgenden Beschreibung näher erläutert.

Es zeigen
- Figur 1: ein erstes Blockschaltbild der Primärseite der erfindungsgemäßen Vorrichtung und
- Figur 2: ein Blockschaltbild, das die Sekundärseite der erfindungsgemäßen Vorrichtung zeigt.

### Beschreibung

Neue Airbaggenerationen weisen in der Elektronik ein hohes Maß an Redundanz auf. Dabei ist es vorgesehen, dass der Mikrokontroller als ein Prozessor, der die Auswertung und den Auslösealgorithmus durchführt, auch mit einem sogenannten Sicherheitshalbleiter verbunden ist, der die Daten der Sensoren ebenfalls einliest und unabhängig überprüft. Nur, wenn auch dieser Sicherheitshalbleiter auf eine Auslösung erkennt, kommt es zur Auslösung von Rückhaltemitteln, sofern dies der Mikrokontroller auch erkennt. Zusätzlich können diverse Watchdogüberwachungen und andere Sicherheitsstrukturen im Zündkreis vorgesehen sein.

Erfindungsgemäß ist es nun vorgesehen, die Redundanz der Prozessoren, die durch den Sicherheitshalbleiter und den Mikrokontroller erreicht wird, auch sekundärseitig fortzusetzen. Dabei wird primärseitig ein Transceiver mit dem Mikrokontroller und dem Sicherheitshalbleiter als den beiden Prozessoren verbunden, wobei der Transceiver über üblicherweise zwei Übertrager, einen Daten- und einen Leistungsübertrager, mit einer Sekundärseite verbunden ist, die beispielsweise im Lenkrad oder einem herausnehmbaren Sitz angeordnet ist. Die Sekundärseite weist jeweils einen Transceiverblock an der Highside und an der Lowside des Zündelements auf. In jedem Transceiverblock ist jeweils ein Prozessor angeordnet, der mit dem anderen Prozessor über eine Kommunikationsleitung verbunden ist. Damit kann durch die beiden Prozessoren auch sekundärseitig eine Redundanz entsprechend der Primärseite erzielt werden.

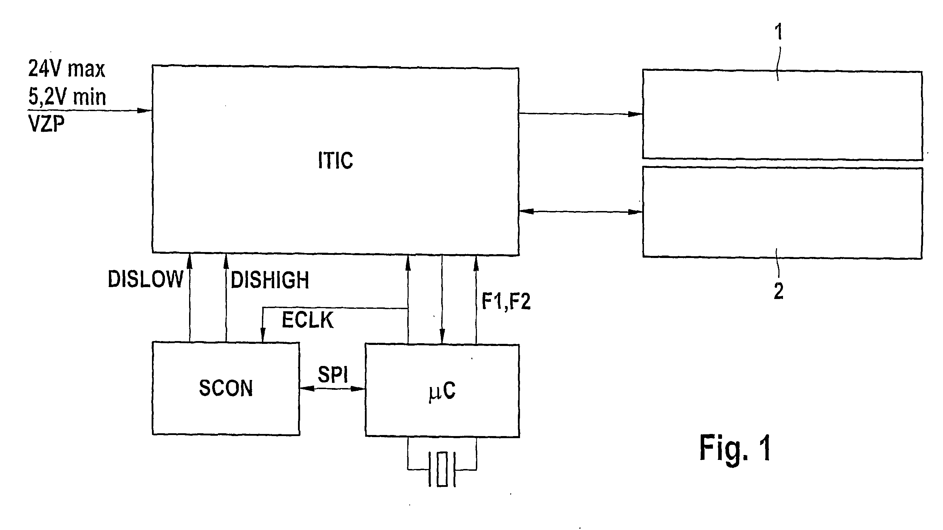

Figur 1 zeigt in einem Blockschaltbild die Primärseite der erfindungsgemäßen Vorrichtung. Ein Transceiver ITIC ist jeweils über zwei Dateneingänge mit einem Mikrokontroller µC und einem Sicherheitshalbleiter SCON verbunden. Der Mikrokontroller µC ist über eine Leitung SPI mit dem Sicherheitshalbleiter SCON verbunden. Weiterhin ist über einen Datenausgang der Mikrokontroller µC über eine Leitung ECLK mit dem Sicherheitshalbleiter SCON weiterhin verbunden. An den Transceiver ITIC ist weiterhin eine Leitung VZP zur Spannungsversorgung angeschlossen. Der Transceiver ITIC ist über einen ersten Ausgang mit einem Leistungsübertrager 1 verbunden und über einen Ein-/Ausgang mit einem Datenübertrager 2. Der Leistungsübertrager 1 und der Datenübertrager 2 sind jeweils Transformatoren.

Der Transceiver ITIC stellt die Spannung und die Frequenz für die Energieübertragung sowie die Spannung und Frequenz für das Enable-Signal im Redundanzpfad über den Leistungsübertrager 1 bereit. Weiterhin beinhaltet der Transceiver ITIC Mittel zur Datenübertragung über den Datenübertrager 2. Solche Mittel sind beispielsweise geeignete Treiber. Der Mikrokontroller µC gibt über den Transceiver ITIC ein Auslösesignal F1 und auch Diagnosesignale F2 ab. Die Antworten auf die Diagnosesignale, die von der Sekundärseite über den Datenübertrager 2 zurück an den Transceiver ITIC übertragen werden, werden dann an den Mikrokontroller µC weitergegeben, der darauf hin die Funktionsfähigkeit von Komponenten, insbesondere eines Zündelements, überprüft und feststellt. Der Sicherheitshalbleiter oder Sicherheitscontroller SCON wertet parallel zum Mikrokontroller µC Sensorsignale aus, um auf einen Auslösefall zu erkennen. Erkennt der Kontroller SCON ebenfalls einen Auslösefall, dann überträgt SCON an ITIC ein Enable-Signal, erkennt der Sicherheitshalbleiter keinen Auslösefall, dann überträgt der Kontroller SCON kein Signal oder ein Disable-Signal. Die von dem Transceiver ITIC an den oder die Übertrager weitergegebenen Signale werden dann sekundärseitig an die beiden Prozessoren zur Auswertung weiterübertragen.

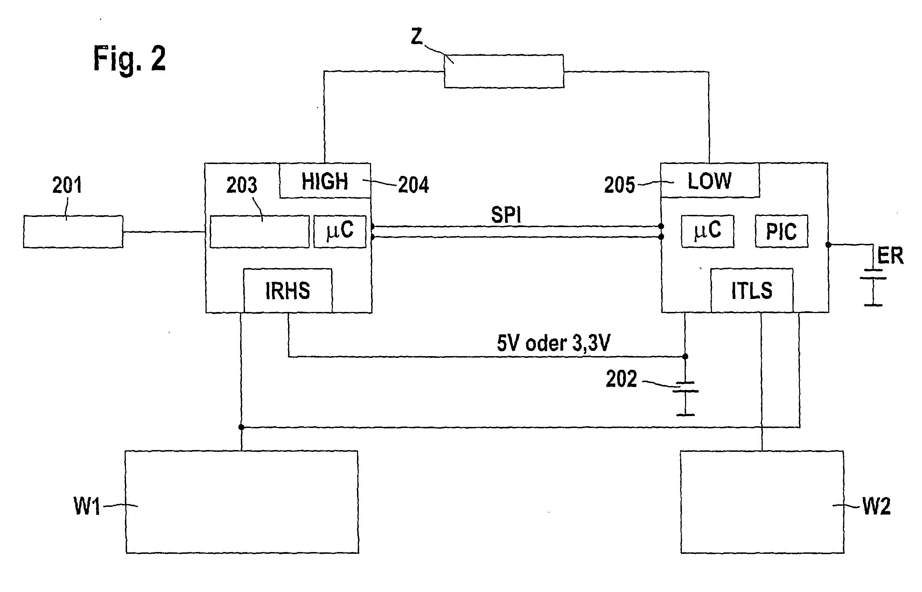

In Figur 2 ist in einem Blockschaltbild der Aufbau der Sekundärseite der erfindungsgemäßen Vorrichtung dargestellt. Eine Wicklung W 1 des Leistungsübertragers 1 ist mit einem Transceiverblock IRHS und einem weiteren Transceiverblock ITLS verbunden. Eine Wicklung W2 des Datenübertragers 2 ist nur mit dem Transceiver ITLS verbunden. Der Transceiver IRHS ist mit einem Schalter 201 sowie einem Zündelement Z verbunden. Der Transceiver IRHS ist über eine Doppelleitung SPI (Serial Periperial Interface), das ist eine serielle Datenleitung, mit dem Transceiver ITLS verbunden, so dass die beiden Prozessoren µC, die sich jeweils in den Transceiverblöcken befinden, miteinander Daten austauschen können. Die beiden Transceiverblöcke IHRS und ITLS sind jeweils mit einer Energiequelle 202, hier eine Spannungsquelle, verbunden. Der Transceiver ITLS ist ebenfalls mit der Zündpille verbunden, und zwar mit der Lowside und weiterhin mit einer Energiereserve ER, die direkt an einen Power IC (Leistungshalbleiter) im Transceiverblock ITLS verbunden ist. Der Transceiverblock ITLS weist einen Lowsideschalter 205, typischerweise einen Transistorschalter, auf, der im Auslösefall geschlossen wird. Der Transceiverblock IRHS weist einen Highsideschalter 204 auf, der ebenfalls im Auslösefall geschlossen wird, um das Zündelement Z, beispielsweise eine Zündpille, zu zünden. Weiterhin weist der Transceiverblock IRHS einen Auswertebaustein 203 zur Erkennung von Schaltersignalen des Schalters 201 auf.

Wie auf der Primärseite wird auch auf der Sekundärseite durch zwei Mikrokontroller µC eine Redundanz erreicht, die durch die gegenseitige Kommunikation über die Leitung SPI verbessert wird. Der Mikrokontroller µC im Transceiverblock IRHS dient zum Einlesen des Lenkradschalters 201 und optional von Sensoren. Weiterhin wird hier die Versorgungsspannung durch die Energiequelle 202 und die Leistungsübertragung erzeugt und im Zündfall der Highsideschalter 204 geschlossen. Im Transceiver ITLS wird die Energiereserve im Kondensator ER erzeugt und überwacht, und zwar durch den Baustein PIC, den Power IC, und der Lowsideschalter 205 geschlossen, sofern ein Auslösefall vorliegt. Der µC im ITLS organisiert auch die Datenübertragung zur Primärseite über die Wicklung W2. Der Prozessor im Transceiverblock IRHS wertet das Enable-Signal aus, das über die Wicklung W 1 übertragen wird. Das Enable-Signal sagt aus, ob der SCON auf einen Auslösefall erkannt hat oder nicht. Der Prozessor µC im Transceiverblock ITLS wertet den Auslösebefehl aus, der über den Datenübertrager 2 und die Wicklung W2 übertragen wird. Nur, wenn beide Prozessoren in den Transceiverblöcken IRHS und ITLS auf Auslösung durch die Signale erkennen, dann wird das Zündelement Z durch das Schließen der Schalter 204 und 205 gezündet. Dazu wird entweder die Energieversorgung über die Wicklung W1 bzw. die Energiequelle 202 verwendet und gegebenenfalls die Energiereserve ER.

## Patentansprüche

1. Vorrichtung zur drahtlosen Übertragung eines Auslösesignals, wobei die Vorrichtung derart konfiguriert ist, dass die Vorrichtung zur Auslösung über einen ersten Pfad das Auslösesignal und über einen zweiten Pfad ein Redundanzsignal zum Auslösesignal überträgt, **dadurch gekennzeichnet, dass** sowohl primärseitig, als auch sekundärseitig jeweils zwei Prozessoren (µC, SCON) angeordnet sind, die jeweils derart konfiguriert sind, dass die jeweiligen Prozessoren Daten miteinander austauschen.

2. Vorrichtung nach Anspruch 1, **dadurch gekennzeichnet, dass** die Primärseite in einer Lenksäule und die Sekundärseite im Lenkrad angeordnet sind.

3. Vorrichtung nach Anspruch 1, **dadurch gekennzeichnet, dass** die Primärseite im Fahrzeugchassis und die Sekundärseite in einem Fahrzeugsitz angeordnet sind.

4. Vorrichtung nach einem der vorhergehenden Ansprüche, **dadurch gekennzeichnet, dass** primärseitig ein erster Transceiver (ITIC) zur drahtlosen Übertragung angeordnet ist, der mit den beiden primärseitig angeordneten Prozessoren (SCON, µC) verbunden ist, und dass sekundärseitig ein erster Transceiverblock (IRHS) mit einem ersten Prozessor (µC) an einem ersten Anschluss eines Zündelements (Z) und ein zweiter Transceiverblock (ITLS) mit einem zweiten Prozessor (µC) an einem zweiten Anschluss des Zündelements (Z) angeschlossen sind.

5. Vorrichtung nach einem der vorhergehenden Ansprüche, **dadurch gekennzeichnet, dass** die drahtlose Übertragung induktiv konfiguriert ist.

6. Vorrichtung nach Anspruch 4 oder 5, **dadurch gekennzeichnet, dass** der erste Transceiverblock (IRHS) über eine erste Wicklung (W1) das Redundanzsignal und der zweite Transceiverblock (ITLS) über eine zweite Wicklung (W2) das Auslösesignal erhält.

7. Vorrichtung nach Anspruch 6, **dadurch gekennzeichnet, dass** die erste Wicklung (W1) einem Leistungsübertrager (1) und die zweite Wicklung (W2) einem Datenübertrager (2) zugeordnet sind.

8. Vorrichtung nach Anspruch 4, **dadurch gekennzeichnet, dass** der erste Transceiverblock (IRHS) derart konfiguriert ist, dass der erste Transceiverblock (IRHS) eine Versorgungsspannung erzeugt und bei Auslösung einen Highsideschalter (204) schließt, und dass der zweite Transceiverblock (ITLS) derart konfiguriert ist, dass der zweite Transceiverblock (ITLS) eine Energiereserve (ER) erzeugt und überwacht, sowie bei Auslösung einen Lowsideschalter (205) schließt.

## Claims

1. Device for the wireless transmission of a triggering signal, wherein the device is configured in such a manner that the device for triggering transmits the triggering signal via a first path and a redundancy signal for the triggering signal via a second path, **characterized in that** two processors (µC, SCON) are in each case arranged both on the primary side and on the secondary side, which are in each case configured in such a manner that the respective processors exchange data with one another.

2. Device according to Claim 1, **characterized in that** the primary side is arranged in a steering column and the secondary side is arranged in the steering wheel.

3. Device according to Claim 1, **characterized in that** the primary side is arranged in the vehicle chassis and the secondary side is arranged in a vehicle seat.

4. Device according to one of the preceding claims, **characterized in that** on the primary side, a first transceiver (ITIC) for wireless transmission is arranged which is connected to the two processors (SCON, µC) arranged on the primary side, and **in that** on the secondary side, a first transceiver block (IHRS) is connected to a first terminal of an ignition element (Z) with a first processor (µC) and a second transceiver block (ITLS) is connected to a second terminal of the ignition element (Z) with a second processor (µC).

5. Device according to one of the preceding claims, **characterized in that** the wireless transmission is configured inductively.

6. Device according to Claim 4 or 5, **characterized in that** the first transceiver block (IRHS) receives the redundancy signal via a first winding (W1) and the second transceiver block (ITLS) receives the triggering signal via a second winding (W2).

7. Device according to Claim 6, **characterized in that** the first winding (W1) is allocated to a power transformer (1) and the second winding (W2) is allocated to a data transformer (2).

8. Device according to Claim 4, **characterized in that** the first transceiver block (IRHS) is configured in such a manner that the first transceiver block (IRHS) generates a supply voltage and on triggering closes a high-side switch (204), and **in that** the second transceiver block (ITLS) is configured in such a manner that the second transceiver block (ITLS) generates and monitors an energy reserve (ER) and, on triggering, closes a low-side switch (205).

## Revendications

1. Dispositif de transmission sans fil d'un signal de déclenchement, configuré pour transmettre pour le déclenchement le signal de déclenchement par une première voie et un signal de redondance au signal de déclenchement par une deuxième voie,
**caractérisé en ce qu'**
aussi bien côté primaire que côté secondaire respectivement deux processeurs (µC, SCON) sont configurés pour échanger des données entre les processeurs respectifs.

2. Dispositif selon la revendication 1,
**caractérisé en ce que**
le côté primaire est disposé dans une colonne de direction et le côté secondaire dans le volant.

3. Dispositif selon la revendication 1,
**caractérisé en ce que**
le côté primaire est disposé dans le châssis du véhicule et le côté secondaire dans un siège du véhicule.

4. Dispositif selon l'une quelconque des revendications précédentes,
**caractérisé en ce que**
côté primaire un premier récepteur-émetteur (ITIC) pour la transmission sans fil est relié aux deux processeurs (SCON, µC) disposés côté primaire, et côté secondaire un premier bloc récepteur-émetteur (IRHS) avec un premier processeur (µC) est connecté à une première prise d'un élément d'allumage (Z) et un deuxième bloc récepteur-émetteur (ITLS) avec un deuxième processeur (µC) à une deuxième prise de l'élément d'allumage (Z).

5. Dispositif selon l'une des revendications précédentes,
**caractérisé en ce que**
la transmission sans fil est inductive.

6. Dispositif selon la revendication 4 ou 5,
**caractérisé en ce que**
le premier bloc récepteur-émetteur (IRHS) reçoit le signal de redondance par un premier bobinage (W1) et le deuxième bloc récepteur-émetteur reçoit le signal de déclenchement par un deuxième bobinage (W2).

7. Dispositif selon la revendication 6,
**caractérisé en ce que**
le premier bobinage (W1) est associé à un transmetteur de puissance (1) et le deuxième bobinage à un transmetteur de données (2).

8. Dispositif selon la revendication 4,
**caractérisé en ce que**
le premier bloc récepteur-émetteur (IRHS) est configuré pour générer une tension d'alimentation et fermer lors d'un déclenchement un commutateur côté courant fort (204), et le deuxième bloc récepteur-émetteur (ITLS) est configuré pour générer et surveiller une réserve d'énergie (ER) et lors d'un déclenchement fermer un commutateur côté courant faible (205).
